# EUROPEAN PATENT APPLICATION

(11) **EP 4 752 989 A1**
(43) Date of publication of application: **03.06.2026**
(21) Application number: 24844546.2
(22) Date of filing: 28.06.2024
(51) Int. Cl.: H01M 4/88, H01M 4/96, H01M 4/86, H01M 8/1004

(54) **CATALYST LAYER PREPARATION METHOD, CATALYST LAYER AND FUEL CELL**

(30) Priority: 27.07.2023 CN 202310933019
(71) Applicant: Dongfeng Motor Group Co., Ltd., Wuhan, Hubei 430056 (CN)
(72) Inventor: HUANG, Lei, Wuhan, Hubei 430056 (CN); LUO, Bian, Wuhan, Hubei 430056 (CN); TANG, Xuejun, Wuhan, Hubei 430056 (CN); LI, Hongtao, Wuhan, Hubei 430056 (CN); WANG, Zhijie, Wuhan, Hubei 430056 (CN)
(74) Representative: Gille Hrabal Partnerschaftsgesellschaft mbB Patentanwälte
(86) International application number: PCT/CN2024/102275
(87) International publication number: WO 2025/020852

(57) **Abstract**

A catalyst layer preparation method, the method comprising the following steps: providing a supporting layer, and soaking the supporting layer in methanol; dissolving dimethylimidazole and zinc nitrate in the methanol in which the supporting layer is soaked so as to obtain a prefabricated liquid, the surface of the supporting layer reacting to form a metal organic framework, such that a prefabricated layer is obtained; cleaning and drying the prefabricated layer, and then soaking same in a mixed solution, the solvent of the mixed solution being at least one of an alcohol solvent and water, and the solute thereof comprising transition metal ions and chloroplatinic acid; and drying the soaked prefabricated layer, and then performing heat treatment on same in a reducing atmosphere at a preset temperature to carbonize the metal organic framework, thereby obtaining a catalyst layer. The metal organic framework material is carbonized to form the catalyst layer, and the in-situ synthesis of the metal organic framework allows for homogeneity and may form catalyst layers having relatively high uniformity.

## Description

### Field of the Invention

The present application relates to the field of fuel cells, and in particular to a fuel cell catalyst layer.

### Background of the Invention

Proton exchange membrane fuel cells (PEMFCs) are a type of high-efficiency energy conversion device that primarily use hydrogen as the reaction fuel, offering advantages such as being green and pollution-free, with widely available fuel sources. The membrane electrode assembly (MEA), as the core reaction site of PEMFCs, determines the performance ceiling of the fuel cell and is also key to reducing fuel cell costs. At present, the preparation of membrane electrode assemblies mainly adopts the second-generation catalyst-coated membrane (CCM) process, in which various coating techniques are used to spray catalyst ink onto the proton exchange membrane. However, the preparation of the catalyst layer involves processes such as catalyst preparation, ink preparation, ink spraying, and catalyst layer drying, which may affect the consistency of catalyst layer preparation. In addition, for MEAs prepared by the CCM process, the catalyst layer often lacks a desirable microscopic bulk-phase structure and sufficient nanoscale porous transport channels, which results in obstruction of water and gas transport within the catalyst layer and even within the membrane electrode, ultimately leading to service failure of the membrane electrode, particularly performance degradation under high current density conditions.

### Summary of the Invention

The embodiment of the present application provides a catalyst layer preparation method, a catalyst layer, and a fuel cell, so as to solve the technical problems of poor consistency and water/gas transport obstruction in MEAs prepared by the CCM process.

In a first aspect, the embodiment of the present application provides a catalyst layer preparation method, and the method comprises the following steps:
providing a supporting layer and soaking the supporting layer in methanol;
dissolving dimethylimidazole and zinc nitrate in the methanol in which the supporting layer is soaked to obtain a prefabricated liquid, wherein the surface of the supporting layer reacts to form a metal-organic framework so as to obtain a prefabricated layer;
cleaning and drying the prefabricated layer, and then soaking same in a mixed solution, wherein the solvent of the mixed solution is at least one of an alcohol solvent and water, and the solute thereof comprises transition metal ions and chloroplatinic acid; and
drying the soaked prefabricated layer, and then performing heat treatment on same at a preset temperature in a reducing atmosphere so as to carbonize the metal-organic framework and obtain the catalyst layer.

In some embodiments of the present application, the supporting layer is a gas diffusion layer, and the step of soaking the supporting layer in methanol comprises:
soaking the gas diffusion layer in the methanol and maintaining a microporous layer of the gas diffusion layer facing upward.

In some embodiments of the present application, the transition metal comprises at least one of Co, Cu, Fe, and Ni.

In some embodiments of the present application, the solvent of the mixed solution is a mixture of methanol and water with a mass ratio of methanol to water of 1:(0.3-3); and/or
in the mixed solution, the concentration of the chloroplatinic acid is 0.005-0.05 mol/L, and the concentration of the transition metal ions is 0.02-0.2 mol/L.

In some embodiments of the present application, the preset temperature is 600-800°C.

In some embodiments of the present application, the reducing atmosphere is provided by hydrogen and argon, with hydrogen accounting for 5%-20% of the total volume.

In some embodiments of the present application, after carbonization of the metal-organic framework, the carbonized metal-organic framework is further soaked in an acidic solution and then washed and dried.

In a second aspect, the embodiment of the present application provides a catalyst layer, and the catalyst layer is prepared by the preparation method according to any of the embodiments of the first aspect.

In a third aspect, the embodiment of the present application provides a fuel cell, and the fuel cell comprises the catalyst layer according to any of the embodiments of the second aspect.

Compared with the prior art, the technical solution in the embodiments of the present application has the following advantages:
the catalyst layer preparation method in the embodiments of the present application forms the catalyst layer through carbonizing the metal-organic framework material, which is completely different from the conventional CCM process and eliminates procedures such as slurry preparation, coating, and hot pressing, thereby avoiding catalyst consistency issues caused by a plurality of processing steps. In the present application, the metal-organic framework is synthesized in situ with uniform properties, enabling the formation of the catalyst layer with high consistency. In addition, the catalyst layer obtained in the present application is formed through carbonizing the metal-organic framework, which possesses a rich porous nanostructure and can form numerous nanoscale porous transport channels, thereby facilitating improved fuel cell operational efficiency, particularly under high current density conditions.

### Brief Description of the Drawings

The drawings are incorporated into the specification and form a part thereof, illustrating embodiments in accordance with the present application and being used together with the specification to explain the principles of the present application.

In order to better illustrate the technical solutions in the embodiments of the present application or the prior art, the following briefly introduces the drawings referred to in the description of the embodiments or the prior art. It is evident that, for those of ordinary skill in the art, other drawings can also be obtained based on these drawings without any inventive work.
Fig. 1 is an SEM image of a catalyst layer obtained in the embodiment 1 of the present application;
Fig. 2 is a polarization curve of the membrane electrodes obtained in the embodiment 1 of the present application and in the comparative embodiment.

### Detailed Description of the Embodiments

In order to make the purpose, technical solutions and advantages of the embodiments of the present application clearer, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by those of ordinary skill in the art without inventive efforts shall fall within the protection scope of the present application.

Unless otherwise specifically stated, the terms used herein shall be understood as having the meanings commonly understood in the art. Therefore, unless otherwise defined, all technical and scientific terms used herein have the same meaning as generally understood by those of ordinary skill in the art in the field of the present application. In the event of any conflict, the description in the specification shall prevail.

Unless otherwise specified, all raw materials, reagents, instruments, and equipment used in the present application can be obtained from the market or prepared by known methods.

The MEA prepared by the CCM process for proton exchange membrane fuel cells faces technical problems such as poor consistency and mass transport limitations of water and gas.

The technical solution provided in the embodiments of the present application aims to address the above technical problems, and the overall approach is as follows:
In a first aspect, the embodiment of the present application provides a catalyst layer preparation method, and the method comprises the following steps:
S1: providing a supporting layer and soaking the supporting layer in methanol;
S2: dissolving dimethylimidazole and zinc nitrate in the methanol in which the supporting layer is soaked to obtain a prefabricated liquid, wherein the surface of the supporting layer reacts to form a metal-organic framework so as to obtain a prefabricated layer;
S3: cleaning and drying the prefabricated layer, and then soaking same in a mixed solution, wherein the solvent of the mixed solution is at least one of an alcohol solvent and water, and the solute thereof comprises transition metal ions and chloroplatinic acid; and
S4: drying the soaked prefabricated layer, and then performing heat treatment on same at a preset temperature in a reducing atmosphere so as to carbonize the metal-organic framework and obtain the catalyst layer.

It should be noted that the supporting layer in the present application refers to a material used to provide a supporting interface for the formation of the catalyst layer. In a preferred embodiment, the supporting layer can be a gas diffusion layer.

Those skilled in the art can understand that, in order to enable uniform growth of the metal-organic framework on the supporting layer, it is necessary to ensure sufficient dissolution of dimethylimidazole and zinc nitrate. For instance, a methanol solution of dimethylimidazole and a methanol solution of zinc nitrate can first be prepared, and then both solutions are added to the methanol in which the supporting layer is soaked.

Those skilled in the art can understand that preparing a metal-organic framework using dimethylimidazole and zinc nitrate is a conventional method in the field.

The prefabricated layer, when soaked in the mixed solution, can adsorb chloroplatinate ions and transition metal ions. The transition metal ions can also coordinate with the ligating functional groups on dimethylimidazole. In addition, substitution of zinc ions by transition metal ions may also occur.

Those skilled in the art can understand that, as a preferred embodiment, the transition metal ions are dissolved in the mixed solution in the form of nitrates. This is because nitrate ions are readily decomposed during the subsequent heat treatment, allowing the transition metal ions to readily form oxides and then be reduced, and residual nitrate ions are therefore easily removed.

Heat treatment is performed on the prefabricated layer in a reducing atmosphere after soaking, such that the metal-organic framework is carbonized to form a porous carbon layer; meanwhile, the transition metal ions in the metal-organic framework are also reduced to metals and form alloy nanoparticles with platinum metal.

Those skilled in the art can prepare a reducing gas to form the reducing atmosphere based on existing knowledge in the art, for example, ammonia, hydrogen, or mixtures thereof with an inert gas. Those skilled in the art can understand that carbon monoxide, due to its strong coordinating ability, is not suitable for the reducing atmosphere of the present application, in other words, the reducing atmosphere referred to in the present application does not comprise carbon monoxide.

The present application forms the catalyst layer through carbonizing the metal-organic framework material, which is completely different from the conventional CCM process and eliminates procedures such as slurry preparation, coating, and hot pressing, thereby avoiding catalyst consistency issues caused by a plurality of processing steps. In the present application, the metal-organic framework is synthesized in situ with uniform properties, enabling the formation of the catalyst layer with high consistency. In addition, the catalyst layer obtained in the present application is formed through carbonizing the metal-organic framework, which possesses a rich porous nanostructure and can form numerous nanoscale porous transport channels, thereby facilitating improved fuel cell operational efficiency, particularly under high current density conditions.

In some embodiments of the present application, the supporting layer is a gas diffusion layer, and the step of soaking the supporting layer in methanol comprises:
S11. The gas diffusion layer is soaked in the methanol, with a microporous layer of the gas diffusion layer facing upward.

Those skilled in the art can understand that the gas diffusion layer generally comprises a carbon paper and the microporous layer provided on the carbon paper. Those skilled in the art can understand that when the gas diffusion layer is soaked in the methanol, it will sink to the bottom of the container. In the present application, it is necessary to prepare the metal-organic framework in situ on the microporous layer, and if the microporous layer faces downward, it will contact the bottom of the container, which is unfavorable for the formation of the metal-organic framework. Therefore, it is necessary for the microporous layer to face upward.

The concentrations of zinc nitrate and dimethylimidazole in the methanol in the prefabricated solution can affect the formation rate of the metal-organic framework. Excessively high concentrations of zinc nitrate and dimethylimidazole may lead to overly rapid formation of the metal-organic framework, resulting in poor uniformity of the metal-organic framework formed on the surface of the supporting layer; conversely, excessively low concentrations of zinc nitrate and dimethylimidazole may result in an excessively slow formation rate of the metal-organic framework.

In some embodiments of the present application, the transition metal comprises at least one of Co, Cu, Fe, and Ni.

Nitrates of Co, Cu, Fe, and Ni are common industrial raw materials, and alloys of Co, Cu, Fe, and Ni with platinum exhibit good catalytic activity for the oxygen reduction reaction and the hydrogen oxidation reaction in proton exchange membrane fuel cells.

In some embodiments of the present application, the solvent of the mixed solution is a mixture of methanol and water with a mass ratio of methanol to water of 1:(0.3-3); and/or
in the mixed solution, the concentration of the chloroplatinic acid is 0.005-0.05 mol/L, and the concentration of the transition metal ions is 0.02-0.2 mol/L.

The beneficial effect of selecting a mixed solvent of methanol and water for the mixed solution is that the distribution of organic molecules such as dimethylimidazole can be optimized, facilitating uniform dispersion of the dimethylimidazole. The beneficial effect of using a mass ratio of methanol to water of 1:(0.3-3) is that the solvent dissolving ability can be finely tuned, allowing regulation of the coordination rate between organic molecules and zinc ions and the spatial structure of the coordinated molecules.

The beneficial effect of controlling the concentrations of chloroplatinic acid and transition metal ions within the above range is that a large number of alloy nanoparticles with catalytic activity can be generated, while preventing the particle size of the alloy nanoparticles from becoming excessively large, which could reduce catalytic activity or even cause agglomeration.

In some embodiments of the present application, the preset temperature is 600-800°C.

The beneficial effect of controlling the preset temperature within the above range is that the metal-organic framework can be fully carbonized, while preventing excessive growth of the alloy nanoparticles that would lead to an overly large particle size or even agglomeration.

In some embodiments of the present application, the reducing atmosphere is provided by a mixture of hydrogen and argon, with hydrogen accounting for 5%-20% of the total volume.

Controlling the volume fraction of hydrogen within the above range can provide a mild environment for the reduction of the valuable metal elements, thereby controlling the growth rate of the alloy nanoparticles.

In some embodiments of the present application, after carbonization of the metal-organic framework, the carbonized metal-organic framework is further soaked in an acidic solution and then washed and dried.

For example, the acid solution can be at least one of sulfuric acid, nitric acid, and hydrochloric acid solutions. Preferably, the acid solution is hydrochloric acid or nitric acid, because any residual hydrochloric acid or nitric acid can easily volatilize during subsequent high-temperature treatment.

For example, the concentration of hydrogen ion in the acid solution can be 0.2-2 mol/L, and the soaking time in the acid solution can be 8-24 hours.

In a second aspect, the embodiment of the present application provides a catalyst layer, and the catalyst layer is prepared by the preparation method according to any of the embodiments of the first aspect. The catalyst layer is realized based on the preparation method of the catalyst layer in the first aspect, and the specific embodiments of the catalyst layer can refer to the embodiments of the first aspect. Since the catalyst layer adopts all the technical solutions of the embodiments of the first aspect, it at least possesses all the beneficial effects brought by the technical solutions of the embodiments of the first aspect, which will not be repeated herein.

In a third aspect, the embodiment of the present application provides a fuel cell, and the fuel cell comprises the catalyst layer according to any of the embodiments of the second aspect. The fuel cell is realized based on the catalyst layer in the second aspect, and the specific embodiments of the fuel cell can refer to the embodiments of the second aspect as well as well-known knowledge in the field of fuel cells. Since the fuel cell adopts all the technical solutions of the embodiments of the second aspect, it at least possesses all the beneficial effects brought by the technical solutions of the embodiments of the second aspect, which will not be repeated herein.

The present application will be further illustrated below with reference to specific embodiments. It should be understood that these embodiments are provided merely to illustrate the present application and are not intended to limit the scope thereof. Experimental methods in the following embodiments, for which specific conditions are not indicated, are generally carried out in accordance with national standards. If no corresponding national standard exists, general international standards, conventional conditions, or conditions recommended by the manufacturer are followed.

### Embodiment 1

The embodiment provides a catalyst layer, which is successively prepared through the following steps:
providing a gas diffusion layer, soaking the gas diffusion layer in 60 mL of anhydrous methanol, and maintaining the microporous layer of the gas diffusion layer facing upward, wherein the gas diffusion layer and the anhydrous methanol used for soaking together form a pre-reaction system A;
adding 500 mg of dimethylimidazole to 50 mL of anhydrous methanol and stirring at a rotation speed of 500 r/min for 30 minutes to obtain solution B;
adding 300 mg of zinc nitrate hexahydrate to 50 mL of anhydrous methanol and stirring at a rotation speed of 500 r/min for 30 minutes to obtain solution C;
adding the solution B and the solution C to the pre-reaction system A to obtain a reaction system D, stirring at a rotation speed of 500 r/min for 40 minutes to form a composite layer comprising the metal-organic framework and the gas diffusion layer, and washing the composite layer followed by drying at 60°C for 12 hours;
providing 30 mL of mixed solvent E formed by mixing anhydrous methanol and water at a mass ratio of 1:1, soaking the composite layer therein, adding solution F dropwise into the mixed solvent E, wherein the solution F is a mixed solution of cobalt nitrate and chloroplatinic acid, with a cobalt ion concentration of 0.1 mol/L, a chloroplatinic acid concentration of 0.05 mol/L, and a volume of the solution F of 3-20 mL;
drying the soaked composite layer at 60°C for 12 hours, then placing the dried composite layer in a quartz boat and transferring same into a tubular furnace for heat treatment at 700°C for 3 hours under a reducing atmosphere, wherein the reducing atmosphere is a mixed gas of hydrogen and argon, with hydrogen occupying 10 % by volume; and
soaking the cooled composite layer in 1 mol/L of hydrochloric acid for 20 minutes, then removing, washing, and drying the composite layer at 60°C for 12 hours to obtain the catalyst layer.

This embodiment further provides a fuel cell, prepared through the following method:
providing a proton exchange membrane; and
adhering the catalyst layer obtained in this embodiment, which is itself attached to the gas diffusion layer, onto both sides of the proton exchange membrane to obtain a membrane electrode.

The obtained membrane electrode is assembled with the gas diffusion layer and the housing components of the fuel cell, thereby obtaining the fuel cell.

### Embodiment 2

The embodiment provides a catalyst layer, which is successively prepared through the following steps:
providing a gas diffusion layer, soaking the gas diffusion layer in 60 mL of anhydrous methanol, and maintaining the microporous layer of the gas diffusion layer facing upward, wherein the gas diffusion layer and the anhydrous methanol used for soaking together form a pre-reaction system A;
adding 2000 mg of dimethylimidazole to 50 mL of anhydrous methanol and stirring at a rotation speed of 500 r/min for 30 minutes to obtain solution B;
adding 1500 mg of zinc nitrate hexahydrate to 50 mL of anhydrous methanol and stirring at a rotation speed of 500 r/min for 30 minutes to obtain solution C;
adding the solution B and the solution C to the pre-reaction system A to obtain a reaction system D, stirring at a rotation speed of 500 r/min for 40 minutes to form a composite layer comprising the metal-organic framework and the gas diffusion layer, and washing the composite layer followed by drying at 60°C for 12 hours;
providing 100 mL of mixed solvent E formed by mixing anhydrous methanol and water at a mass ratio of 1:1, soaking the composite layer therein, adding solution F dropwise into the mixed solvent E, wherein the solution F is a mixed solution of nickel nitrate and chloroplatinic acid, with a nickel ion concentration of 0.1 mol/L, a chloroplatinic acid concentration of 0.05 mol/L, and a volume of the solution F of 3-20 mL;
drying the soaked composite layer at 60°C for 12 hours, then placing the dried composite layer in a quartz boat and transferring same into a tubular furnace for heat treatment at 700°C for 3 hours under a reducing atmosphere, wherein the reducing atmosphere is a mixed gas of hydrogen and argon, with hydrogen occupying 10 % by volume; and
soaking the cooled composite layer in 1 mol/L of hydrochloric acid for 20 minutes, then removing, washing, and drying the composite layer at 60°C for 12 hours to obtain the catalyst layer.

This embodiment further provides a fuel cell, prepared through the following method:
providing a proton exchange membrane; and
adhering the catalyst layer obtained in this embodiment, which is itself attached to the gas diffusion layer, onto both sides of the proton exchange membrane to obtain a membrane electrode.

The obtained membrane electrode is assembled with the gas diffusion layer and the housing components of the fuel cell, thereby obtaining the fuel cell.

### Embodiment 3

The embodiment provides a catalyst layer, which is successively prepared through the following steps:
providing a gas diffusion layer, soaking the gas diffusion layer in 60 mL of anhydrous methanol, and maintaining the microporous layer of the gas diffusion layer facing upward, wherein the gas diffusion layer and the anhydrous methanol used for soaking together form a pre-reaction system A;
adding 1000 mg of dimethylimidazole to 50 mL of anhydrous methanol and stirring at a rotation speed of 500 r/min for 30 minutes to obtain solution B;
adding 800 mg of zinc nitrate hexahydrate to 50 mL of anhydrous methanol and stirring at a rotation speed of 500 r/min for 30 minutes to obtain solution C;
adding the solution B and the solution C to the pre-reaction system A to obtain a reaction system D, stirring at a rotation speed of 500 r/min for 40 minutes to form a composite layer comprising the metal-organic framework and the gas diffusion layer, and washing the composite layer followed by drying at 60°C for 12 hours;
providing 50 mL of mixed solvent E formed by mixing anhydrous methanol and water at a mass ratio of 1:1, soaking the composite layer therein, and adding solution F dropwise into the mixed solvent E, wherein the solution F is a mixed solution of copper nitrate, iron nitrate, and chloroplatinic acid, with a copper ion concentration of 0.02 mol/L, an iron ion concentration of 0.08 mol/L, a chloroplatinic acid concentration of 0.05 mol/L, and a volume of the solution F of 3-20 mL;
drying the soaked composite layer at 60°C for 12 hours, then placing the dried composite layer in a quartz boat and transferring same into a tubular furnace for heat treatment at 700°C for 3 hours under a reducing atmosphere, wherein the reducing atmosphere is a mixed gas of hydrogen and argon, with hydrogen occupying 10 % by volume; and
soaking the cooled composite layer in 1 mol/L of hydrochloric acid for 20 minutes, then removing, washing, and drying the composite layer at 60°C for 12 hours to obtain the catalyst layer.

This embodiment further provides a fuel cell, prepared through the following method:
providing a proton exchange membrane; and
adhering the catalyst layer obtained in this embodiment, which is itself attached to the gas diffusion layer, onto both sides of the proton exchange membrane to obtain a membrane electrode.

The obtained membrane electrode is assembled with the gas diffusion layer and the housing components of the fuel cell, thereby obtaining the fuel cell.

### Comparative Embodiment

The difference between this comparative embodiment and the embodiment 1 is that the same catalytic material as in the embodiment 1 is prepared in this comparative embodiment, but the catalyst layer is formed by the conventional CCM process. The comparative embodiment is specifically as follows:
The comparative embodiment first provides a catalyst material, and the catalyst material is prepared by the following method:
providing 60 mL of anhydrous methanol as a pre-reaction system A;
adding 500 mg of dimethylimidazole to 50 mL of anhydrous methanol and stirring at a rotation speed of 500 r/min for 30 minutes to obtain solution B;
adding 300 mg of zinc nitrate hexahydrate to 50 mL of anhydrous methanol and stirring at a rotation speed of 500 r/min for 30 minutes to obtain solution C;
adding the solution B and the solution C into the pre-reaction system A to obtain a reaction system D, stirring at a rotation speed of 500 r/min for 40 minutes to obtain a metal-organic framework, and washing the metal-organic framework followed by drying at 60°C for 12 hours;
providing 30 mL of mixed solvent E formed by mixing anhydrous methanol and water at a mass ratio of 1:1, soaking the metal-organic framework therein, adding solution F dropwise into the mixed solvent E, wherein the solution F is a mixed solution of cobalt nitrate and chloroplatinic acid, with a cobalt ion concentration of 0.1 mol/L, a chloroplatinic acid concentration of 0.05 mol/L, and a volume of the solution F of 3-20 mL;
drying the soaked metal-organic framework at 60°C for 12 hours, then placing the dried metal-organic framework in a quartz boat and transferring same into a tubular furnace for heat treatment at 700°C for 3 hours under a reducing atmosphere, wherein the reducing atmosphere is a mixed gas of hydrogen and argon, with hydrogen occupying 10 % by volume; and
soaking the cooled metal-organic framework in 1 mol/L of hydrochloric acid for 20 minutes, then removing, washing, and drying the metal-organic framework at 60°C for 12 h to obtain the catalytic material.

This comparative embodiment further provides a fuel cell, prepared through the following method:
providing a proton exchange membrane; and
preparing a catalytic layer: taking the catalytic material provided in the comparative embodiment, adding deionized water for wetting, then adding a Nafion emulsion with a mass fraction of 5% and isopropanol, mixing uniformly to obtain a catalyst ink, and controlling the solid content of the catalyst ink to be 2%; and performing ultrasonic treatment on the catalyst ink for 30 min in an ice-water bath, and then ultrasonically spraying the catalyst ink onto both surfaces of the proton exchange membrane to form an anode catalyst layer and a cathode catalyst layer, thereby obtaining a membrane electrode.

The obtained membrane electrode is assembled with the gas diffusion layer and the housing components of the fuel cell, thereby obtaining the fuel cell.

### Relevant Experiments and Performance Data

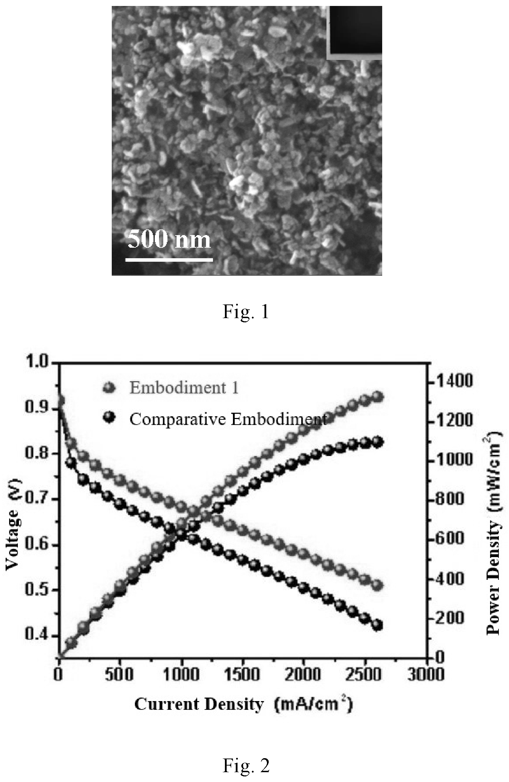

Scanning electron microscopy (SEM) testing is performed on the embodiment 1, and the obtained SEM image is shown in Fig. 1.

As shown in Fig. 1, a large number of carbon nanotubes and stacked pore structures are uniformly distributed on the surface of the catalyst layer, with nanostructures measuring approximately tens of nanometers. These complex nanostructures provide numerous transport channels for water and gas, thereby ensuring mass transport performance under high current density conditions.

Hydrogen-air fuel cell tests are performed on the embodiment 1 and the comparative embodiment under the following conditions: the membrane electrode is activated under a voltage of 0.5 V with a load applied for 2 hours, until the current density reached a stable state. The electrode area is 25 cm², and the test conditions are: temperature 80°C, relative humidity 100%, back pressure 150 kPa, cathode/anode gas flow rates 500/210 cc/min, and excess coefficients 1.5/2.5. Subsequently, polarization curve tests are performed in the range of 0-65 A, with a measurement point taken every 2.5 A and a time interval of 60s between points.

The polarization curves of the embodiment 1 and the comparative embodiment are shown in Fig. 2. At a high current density of 2000 mA/cm², the membrane electrode of the embodiment 1 reaches a voltage of 0.580 V, corresponding to a power density of 1.16 W/cm², demonstrating superior membrane electrode performance. In contrast, the comparative embodiment exhibits a voltage of 0.505 V at the same current density of 2000 mA/cm², corresponding to a power density of 1.01 W/cm², which does not exceed the performance of membrane electrodes obtained by conventional CCM processes. Since the materials in the embodiment 1 and the comparative embodiment are identical, with the only difference being the preparation method of the catalyst layer, the hydrogen-air fuel cell test results demonstrate that the preparation method used in the embodiment 1 is superior.

The various embodiments of the present application may be presented in the form of a range; it should be understood that describing a range is merely for convenience and brevity and should not be construed as a strict limitation on the protection scope of the present application. Therefore, the range description should be considered to have specifically disclosed all possible sub-ranges and individual values within that range. For example, it should be understood that a range described from 1 to 6 specifically discloses sub-ranges such as 1 to 3, 1 to 4, 1 to 5, 2 to 4, 2 to 6, 3 to 6, and also individual numbers within the range, such as 1, 2, 3, 4, 5, and 6, which applies regardless of the specific range. In addition, whenever a numerical range is indicated herein, it refers to any cited number within the indicated range, whether fractional or integer.

Unless otherwise specified, directional terms such as "upper" and "lower" specifically refer to the orientation shown in the drawings. Furthermore, in the specification of the present application, terms such as "comprise" and "include" are intended to mean "comprise but not limited to". Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising..." does not exclude the existence of other same elements in the process, method, article, or device comprising the elements. In this specification, relational terms such as "first" and "second" are only for distinguishing one entity or operation from another entity or operation, and do not necessarily require or imply any such actual relationship or order between these entities or operations. In this specification, the term "and/or" is merely a description of the association relationship of associated objects, indicating that three relationships are possible. For example, A and/or B can represent three situations: the existence of A alone, the simultaneous existence of both A and B, or the existence of B alone. For three or more associated objects described using the term "and/or", the term indicates that any one of the objects can exist alone, or any combination of at least two of the objects can exist simultaneously. For example, A, and/or B, and/or C can mean that any one of A, B, or C exists alone, any two exist together, or all three exist simultaneously. In this specification, the term "at least one" refers to one or more, and "a plurality of" refers to two or more. The expressions "at least one of" "at least one item below" or similar terms refer to any combination of the listed items, comprising any single item or any combination of two or more items. For example, "at least one of a, b, or c" or "at least one of a, b, and c" may refer to: a, b, c, a-b (i.e., a and b), a-c, b-c, or a-b-c, wherein a, b, and c may each individually refer to a single item or to a plurality of items.

The above-mentioned are only the embodiments of the present application, so that those skilled in the art can understand or implement the present application. For those skilled in the art, various modifications to these embodiments will be obvious, and the general principles defined herein can be implemented in other embodiments without departing from the spirit or scope of the present application. Therefore, the present application will not be limited to the embodiments shown in this document, but will be subject to the widest scope consistent with the principles and novel features applied herein.

## Claims

1. A catalyst layer preparation method, comprising the following steps:
providing a supporting layer and soaking the supporting layer in methanol;
dissolving dimethylimidazole and zinc nitrate in the methanol in which the supporting layer is soaked to obtain a prefabricated liquid, wherein the surface of the supporting layer reacts to form a metal-organic framework so as to obtain a prefabricated layer;
cleaning and drying the prefabricated layer, and then soaking same in a mixed solution, wherein the solvent of the mixed solution is at least one of an alcohol solvent and water, and the solute thereof comprises transition metal ions and chloroplatinic acid; and
drying the soaked prefabricated layer, and then performing heat treatment on same at a preset temperature in a reducing atmosphere so as to carbonize the metal-organic framework and obtain the catalyst layer.

2. The catalyst layer preparation method according to claim 1, wherein the supporting layer is a gas diffusion layer, and the step of soaking the supporting layer in methanol comprises:
soaking the gas diffusion layer in the methanol and maintaining a microporous layer of the gas diffusion layer facing upward.

3. The catalyst layer preparation method according to claim 1, wherein the transition metal comprises at least one of Co, Cu, Fe, and Ni.

4. The catalyst layer preparation method according to claim 1, wherein the solvent of the mixed solution is a mixture of methanol and water with a mass ratio of methanol to water of 1:(0.3-3); and/or
in the mixed solution, the concentration of the chloroplatinic acid is 0.005-0.05 mol/L, and the concentration of the transition metal ions is 0.02-0.2 mol/L.

5. The catalyst layer preparation method according to claim 1, wherein the preset temperature is 600-800°C.

6. The catalyst layer preparation method according to claim 1, wherein the reducing atmosphere is provided by hydrogen and argon, with hydrogen accounting for 5%-20% of the total volume.

7. The catalyst layer preparation method according to claim 1, wherein after carbonization of the metal-organic framework, the carbonized metal-organic framework is further soaked in an acidic solution and then washed and dried.

8. A catalyst layer, wherein the catalyst layer is prepared by the preparation method according to any one of claims 1-7.

9. A fuel cell, wherein the fuel cell comprises the catalyst layer according to claim 8.
